(19) Europäisches Patentamt
European Patent Office
Office européen des brevets

(11) **EP 3 636 901 A1**

(12) **EUROPEAN PATENT APPLICATION**

(43) Date of publication:
**15.04.2020 Bulletin 2020/16**

(21) Application number: **19200728.4**

(22) Date of filing: **01.10.2019**

(51) Int Cl.:
*F02D 21/08* (2006.01)      *F02D 41/14* (2006.01)
*F02M 26/47* (2016.01)      *F02M 26/49* (2016.01)
*F02D 41/22* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2018 JP 2018191995**

(71) Applicant: **Nikki Co., Ltd.**
**Kanagawa-ken 243-0801 (JP)**

(72) Inventors:
• **TAKIGAWA, Buso**
**Atsugi, Kanagawa 243-0801 (JP)**
• **ADACHI, Ryota**
**Atsugi, Kanagawa 243-0801 (JP)**

(74) Representative: **Boult Wade Tennant LLP**
**Salisbury Square House**
**8 Salisbury Square**
**London EC4Y 8AP (GB)**

(54) **CONTROL SYSTEM OF EGR ELECTRIC VALVE**

(57)      A control system of an EGR electric valve is proposed, by which a proper EGR rate should be maintained in the entire use life cycle of an engine. An exhaust gas pressure sensor and an exhaust gas temperature sensor are provided upstream of an EGR electric valve (10), and a gas pressure sensor is provided downstream of the EGR electric valve (10). A control device can maintain a constant EGR rate in such a manner that a pressure temperature correction term (30, K$_{EGRPT}$) of an EGR electric valve opening degree (PD_EGRV) is calculated to maintain a proper EGR flow rate in a case where an exhaust gas pressure or an exhaust gas temperature is changed, by using information from said sensors, and is accumulated (31) into an EGR electric valve basic opening degree (25, BASE_P) based on the pressure temperature correction term (30, K$_{EGRPT}$).

FIG.5

EP 3 636 901 A1

**Description**

BACKGROUND

Technical Field

The present invention relates to a control system of an EGR electric valve used in an exhaust gas recirculation (hereinafter, referred to as "EGR") device which allows a part of an exhaust gas discharged from an engine to an exhaust passage to flow through an intake passage as an exhaust recirculation gas and recirculate to the engine.

Related Art

In the related art, nitrogen oxide ($NO_X$) in an exhaust gas is reduced, and fuel consumption during a partial load of the engine is saved in such a manner that a part of an exhaust gas after combustion discharged from a combustion chamber of an engine to an exhaust passage is introduced as an EGR gas through an EGR passage to an intake passage to be mixed with an intake air flowing through the intake passage and recirculates to the combustion chamber.
An electric EGR electric valve capable of controlling opening/closing of a valve body with respect to a valve seat to a minute opening degree by a motor, another actuator, or the like is used as an EGR valve used in an EGR device. For example, JP 7-301155 A and JP 2007-309115 A are proposed.

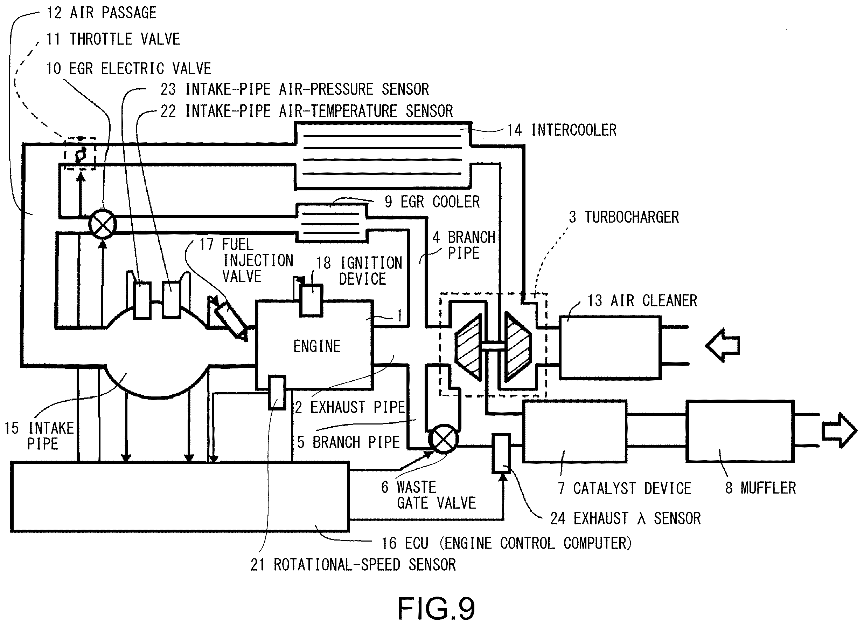

FIG. 9 illustrates one example of a control system of a conventional EGR electric valve. An EGR device system is configured as follows. A turbocharger 3 is connected to an exhaust pipe 2 of a spark ignition engine 1, and an exhaust gas is branched from the exhaust pipe 2 by branch pipes 4 and 5. An air-fuel ratio of an exhaust λ sensor 24 or the like provided in the exhaust pipe 2 is used such that a part of the exhaust gas is discharged through a waste gate valve 6, a catalyst device 7, and a muffler 8 into the atmospheric air, and the other part is cooled by the EGR cooler 9 to be adjusted in a flow rate by the EGR electric valve 10 and is mixed with an intake gas sucked in through an air cleaner 13, the turbocharger 3, and an intercooler 14 in an air passage 12 connecting between a throttle valve 11 and the engine 1. The intake air and the exhaust gas are mixed in the air passage 12 to be delivered to the intake pipe 15 and mixed with a fuel from a fuel injection valve 17 by a control of an engine control computer (hereinafter, referred to as "ECU") 16 to be injected with the fuel into the engine 1, and the engine 1 is operated by a spark ignition-type ignition device 18.
Generally, the EGR electric valve 10 is controlled by the ECU 16 and is a device with a valve structure that can be controlled to have a random opening degree by the command of the ECU 16.

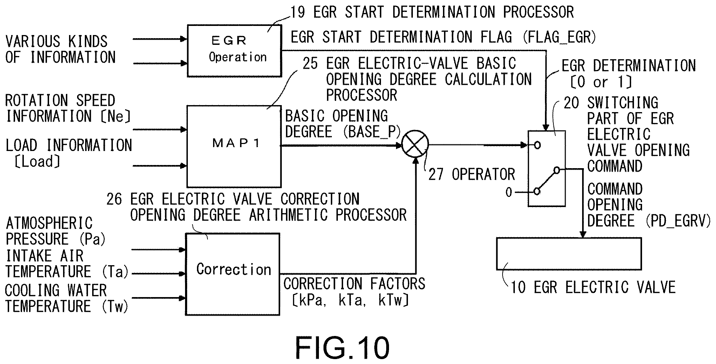

FIG. 10 is a block circuit diagram when the EGR electric valve 10 is controlled to have a random opening degree by the command of the conventional ECU 16 illustrated in FIG. 9. In the ECU 16, a command opening degree (PD_EGRV) which aims for transmission to the EGR electric valve 10 is calculated normally. An EGR start determination flag (FLAG_EGR) is calculated in an EGR start determination processor 19 on the basis of various kinds of information. In a case where it is not satisfied, the command opening degree (PD_EGRV) of 0% is output to the EGR electric valve 10 in a switching part 20 of an EGR electric valve opening command, thereby closing an EGR electric valve 9. In a case where the start requirement is satisfied, the value for a random opening degree of the EGR electric valve 10 stored in the memory in the ECU 16 illustrated in FIG. 9 is read from rotation speed information (Ne) and load information (Load) from a rotational-speed sensor 21 and an intake-pipe air-pressure sensor 23 of the engine 1 illustrated in FIG. 9 to be delivered to an EGR electric-valve basic opening degree calculation processor 25, and a basic opening degree (BASE_P) is calculated to output a predetermined command opening degree (PD_EGRV) to the EGR electric valve 10, thereby opening the EGR electric valve 10.
However, the opening degree calculated by the processing is not robust to the environmental conditions. For this reason, correction factors (KPa, KTa, and KTw) are calculated by an EGR electric valve correction opening degree arithmetic processor 26 by using information such as atmospheric pressure (Pa), intake air temperature (Ta), and cooling water temperature (Tw) which are environmental information by various sensors (not illustrated partially) provided in the engine 1 illustrated in FIG. 9. The correction factors are integrated into the above-described basic opening degree (BASE_P) by an operator 27, and the final command opening degree (PD_EGRV) is calculated.

SUMMARY

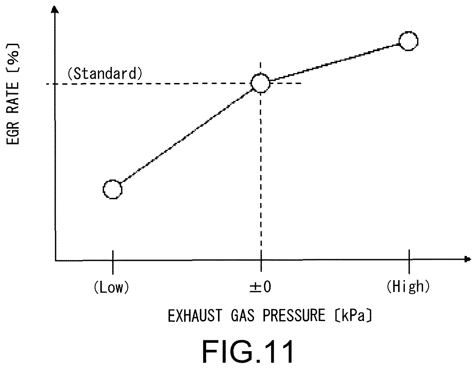

However, in the control system of the conventional EGR electric valve, the system is designed on the assumption that the exhaust gas pressure or the exhaust gas temperature does not change from the state of a new engine.
For this reason, as illustrated in FIG. 11, when the exhaust gas pressure [kPa] decreases, an EGR rate (a numerical value obtained by dividing an amount of an exhaust gas recirculating in the intake system by an intake air amount, that is, a ratio of the EGR gas to the intake gas) [%] decreases. Conversely, when the exhaust gas pressure [kPa] increases, the EGR rate [%] increases. Thus, it is difficult to maintain a proper EGR rate [%] in the entire use life

**EP 3 636 901 A1**

cycle of the engine, and it is necessary to initially set the EGR rate with a margin in anticipation of such errors so as not to adversely affect engine performance even when the EGR rate [%] is varied to a certain extent. Thus, there is a problem that engine performance cannot be exerted sufficiently.

The invention has been made in view of the above-described conventional problems and an object thereof is to provide a controlling method of an EGR electric valve in which a proper EGR rate [%] can be maintained in the entire use life cycle of an engine.

In order to solve the problems, the invention is a control system of an EGR electric valve used in an EGR device of an engine adopting a spark ignition engine. The EGR electric valve includes a driving device capable of electrically controlling a flow rate, an exhaust gas pressure sensor and an exhaust gas temperature sensor are provided in an upstream of the EGR electric valve, and a gas pressure sensor is provided in a downstream of the EGR electric valve, and a control device has a correction method of the EGR electric valve target opening degree for maintaining a constant EGR rate in which a pressure temperature correction term of an EGR electric valve opening degree is calculated to maintain a proper EGR flow rate in a case where an exhaust gas pressure or an exhaust gas temperature is changed by using information from the sensors and is accumulated into an EGR electric basic opening degree based on the pressure temperature correction term.

In the invention, preferably, information of an intake-pipe air-pressure sensor provided in an intake pipe is used as exhaust gas pressure information of the downstream of the EGR electric valve. Information of the pressure temperature correction term of the EGR electric valve opening degree is based on a ratio of exhaust gas pressure information of the electric valve upstream and pressure information of the electric valve downstream. The Information of the pressure temperature correction term of the EGR electric valve opening degree is based on an exhaust the gas density calculated from the exhaust gas pressure information of the electric valve upstream and pressure information of the electric valve upstream. Further, the information of the pressure temperature correction term of the EGR electric valve opening degree is based on a final correction factor calculated by accumulating both calculation results, which each are stored in a computer of the control device, of a ratio of an EGR flow rate change obtained from the exhaust gas pressure information of the electric valve upstream and a pressure ratio of the electric valve downstream and a ratio of an EGR flow rate change by an upstream gas density of an EGR valve.

In the invention, a frequency band passage filter is provided in at least one of the exhaust gas pressure sensor, the exhaust gas temperature sensor, and the gas pressure sensor to eliminate noise information, thereby reducing an unintentional driving of the EGR electric valve. The control device of the EGR electric valve is made common to an ECU, so as to suppress cost increase and achieve cooperation with an engine control.

In the invention, in a case where it is detected that the EGR electric valve target opening degree exceeds a constant range, deterioration of an engine system component and abnormality of an EGR function are detected to be reported to an operating person, thereby performing control more safely.

According to the invention, the control system of the EGR electric valve can be provided in which a proper EGR rate [%] can be maintained in the entire use the life cycle of the engine.

BRIEF DESCRIPTION OF DRAWINGS

FIG. 1 is a schematic view of a control system using an EGR electric valve in a preferable embodiment in the invention;
FIG. 2 is a schematic view illustrating a structure of the EGR electric valve in the embodiment illustrated in FIG. 1;
FIG. 3 is a schematic view illustrating a modeling of the EGR electric valve illustrated in FIG. 2;
FIG. 4 is a relation diagram between an EGR electric valve flow rate and an EGR electric valve upstream gas pressure in the embodiment illustrated in FIG. 1;
FIG. 5 is a block diagram of the control system according to the embodiment illustrated in FIG. 1;
FIG. 6 is a view for explaining a detail of an operation part in a pressure temperature correction term of an EGR electric valve according to the embodiment illustrated in FIG. 1;
FIG. 7 is a relation diagram of an exhaust gas pressure and an EGR rate in a practical test measured actually in the embodiment illustrated in FIG. 1;
FIG. 8 is a relation diagram of the exhaust gas pressure and the EGR rate in another practical test measured actually in the embodiment illustrated in FIG. 1;
FIG. 9 is a schematic view of a control system using an EGR electric valve in a conventional example;
FIG. 10 is a block diagram of the control system according to the conventional example illustrated in FIG. 9; and
FIG. 11 is a relation diagram of an exhaust gas pressure and an EGR rate in the conventional example illustrated in FIG. 9.

DETAILED DESCRIPTION

Hereinafter, a preferable embodiment of the invention will be described in detail with reference to the drawings.

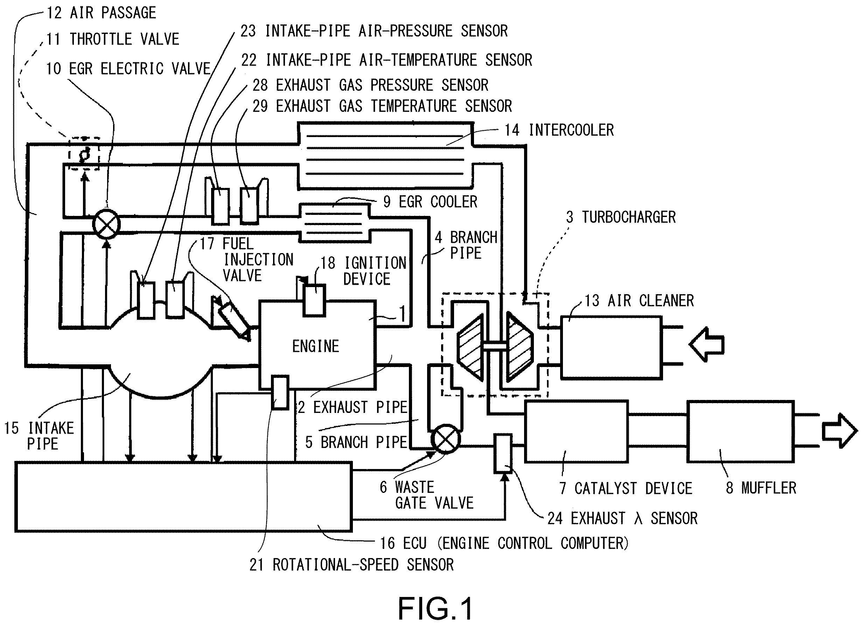

FIG. 1 illustrates a preferable embodiment of the invention. The basic structure and effect are almost similar to those of the conventional example illustrated in FIG. 9, and the overall description is omitted. However, there is a difference in that an exhaust gas pressure sensor 28 and an exhaust gas temperature sensor 29 are added to an upstream portion of an EGR electric valve 10.

The exhaust gas pressure sensor 28 and the exhaust gas temperature sensor 29 are connected to the ECU 16, and a pressure temperature correction calculation is performed in a control device.

In the pressure temperature correction control, the EGR gas flowing through the EGR electric valve 10 is considered as a pressure jet model of a compressible gas.

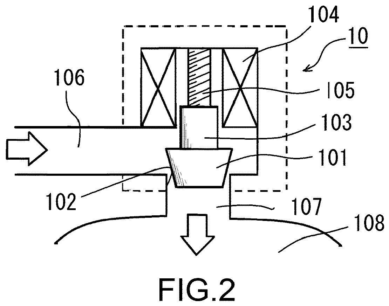

FIG. 2 illustrates a structure of an EGR electric valve preferably used in this embodiment. The EGR electric valve 10 includes a movable valve 101 therein, and a geometric opening area is configured between the movable valve 101 and a valve seat 102. The structure can control a flow rate of the EGR gas by changing the opening area.

A rotor 103 configured by a permanent magnet is connected to the movable valve 101, and the rotor 103 has a structure of being rotated by the electromagnetic coil 104 installed circumferentially. Further, the movable valve 101 is configured to reciprocate in the axial direction when the rotational force is changed into a vertical direction by a ball screw 105, so that the EGR gas flow rate is can be changed electrically. In a narrowest part configured by the movable valve 101 and the valve seat 102, the exhaust gas flows from an EGR gas inlet 106 which is an upstream through an EGR gas outlet 107 to an outlet-side housing 108. At that time, the upstream gas pressure is defined as $P_1$, the temperature is defined as $T_1$, a downstream gas pressure is defined as $P_2$, and a sectional area of the narrowest part is defined as A. A modeling is performed such that the structure is considered as an orifice. Incidentally, the EGR electric valve 10 illustrated in this embodiment is one example. The invention is not limited thereto, and it is needless to say that another form also may be adopted as long as the movable valve 101 is operable to be opened and closed by an electric mechanism.

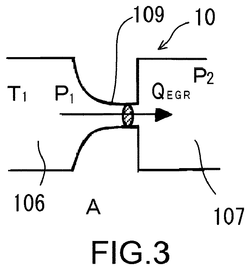

FIG. 3 is a schematic view in which the EGR electric valve 10 is modeled as a tapered nozzle 109 arranged between the EGR gas inlet 106 and the EGR gas outlet 107. According to this, a flow rate ($Q_{EGR}$) flowing through the EGR electric valve 10 is controlled according to a flow rate expression (expression 1) of the pressure jet described below. The solution of the flow rate ($Q_{EGR}$) is a result obtained by dividing the product of a flow rate function ($\varphi$) calculated by a pressure ratio across a nozzle, a sectional area (A), a flow rate coefficient ($C_v$), and an upstream the gas pressure ($P_1$) by a square root of the product of a gas constant (R) and an upstream gas temperature ($T_1$).

[Math 1]

$$Q_{EGR} = A \cdot Cv \cdot \phi \frac{P_1}{\sqrt{R \cdot T_1}} \qquad (1)$$

Incidentally, in expression (1), $Q_{EGR}$ indicates the flow rate of the EGR gas, A indicates the sectional area of the tapered nozzle, $C_V$ indicates the flow rate coefficient, $\varphi$ indicates the flow rate function calculated by the pressure ratio across the nozzle, $P_1$ indicates the upstream gas pressure, R indicates the gas constant, and $T_1$ indicates the upstream gas temperature.

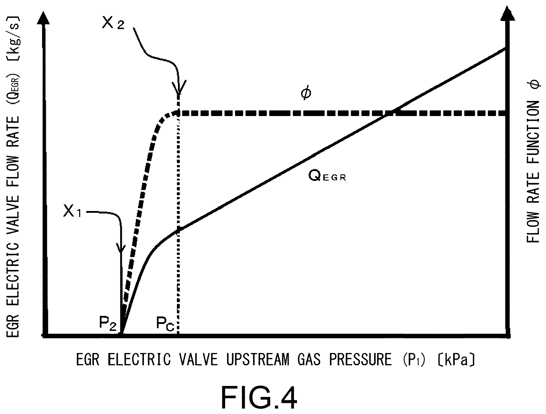

FIG. 4 illustrates a calculation result of expression (1) in a graph. A horizontal axis is set as the upstream gas pressure ($P_1$) of the EGR electric valve, and a vertical axis is set as the EGR gas flow rate ($Q_{EGR}$). In a case where the downstream pressure ($P_2$) of the EGR electric valve, the upstream gas temperature ($T_1$) of the EGR electric valve, and the sectional area (A) of the narrowest part are set constant, the EGR gas flow rate ($Q_{EGR}$) has a tendency indicated by a solid line of the graph.

The flow rate becomes zero at a point $X_1$ where the upstream gas pressure ($P_1$) on an inlet side and the downstream gas pressure ($P_2$) on an outlet side are equal. From the point, the EGR gas flow rate ($Q_{EGR}$) increases with the rise of the upstream gas pressure ($P_1$) on the inlet side while drawing a convex curve upward.

The curve becomes linear near the pressure Pc of the point $X_2$ where the narrowest part reaches the sound velocity, and in the pressure ($P_C < P_1$) thereabove, the EGR gas flow rate tends to increase steadily. In the flow rate function ($\varphi$) indicated by a broken line, the flow speed of the nozzle outlet reaches the sound velocity near the pressure $P_C$. Thus, in the pressure equal to or higher than the pressure $P_C$ of the point $X_2$ where the narrowest part reaches the sound velocity, the flow rate becomes a constant value.

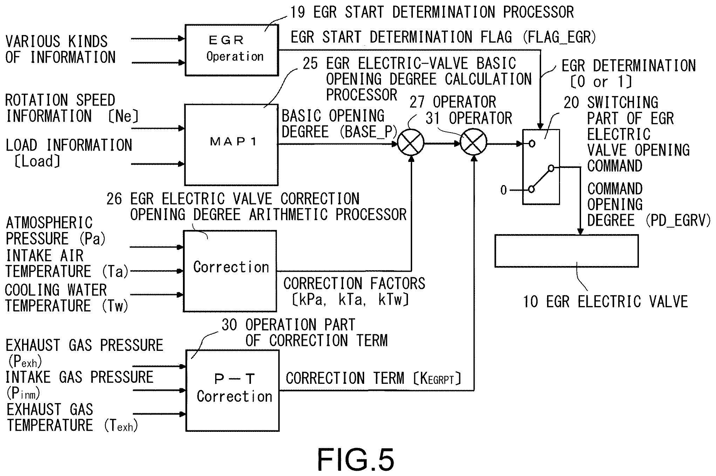

FIG. 5 illustrates a block diagram of a control system of the EGR electric valve of the invention based on the physical model. The control system is configured such that an operation part 30 of the correction term ($K_{EGRPT}$) by the pressure temperature is added with respect to the block diagram of the control system of the conventional EGR electric valve illustrated in FIG. 10, and the calculated value is integrated into the basic opening degree (BASE_P) in the operator 31.

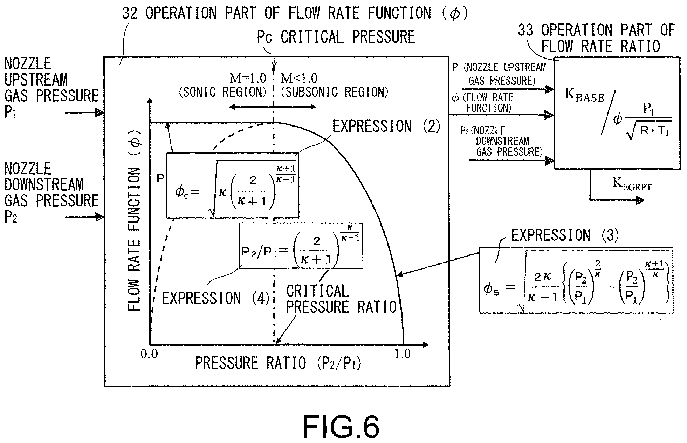

FIG. 6 specifically illustrates the operation part 30 of the pressure temperature correction term illustrated in FIG. 5. The pressure temperature correction term is configured by an operation part 32 of the flow rate function ($\varphi$) which can be calculated by a pressure ratio ($P_2/P_1$) across the nozzle, that is, the upstream gas pressure ($P_1$) on the inlet side and the downstream gas pressure ($P_2$) on the outlet side and an operation part 33 which calculates, as a flow rate ratio, a ratio of a reference flow rate ($K_{BASE}$) to a result obtained by integrating the flow rate function ($\varphi$) with a gas density calculated from a nozzle upstream gas pressure ($P_1$) and a gas temperature ($T_1$).

Herein, the flow rate function ($\varphi$) has a sonic state or a subsonic state depending on whether the pressure ratio ($P_2/P_1$) is equal to or larger than a critical pressure $P_C$ of the point where the narrowest part reaches the sound velocity or is equal to or smaller. Both are calculated by the complicated operation expressions (2) to (4). However, since a specific heat ratio ($\kappa$) becomes constant when the kind of the flowing gas is determined, the above-described expressions (2) to (4) become functions only of the pressure ratio ($P_2/P_1$).

Accordingly, a complicated calculation is not forced to the control computer when the above calculation is performed in advance, the result is stored as the pressure ratio ($P_2/P_1$) information in a computer memory of the ECU 16 or the like illustrated in FIG. 1, and the result is read.

Even in the calculation of the operation part 33 which calculates, as a flow rate ratio, the ratio of the reference flow rate ($K_{BASE}$) to the result obtained by integrating the flow rate function ($\varphi$) with the gas density calculated from the nozzle upstream gas pressure ($P_1$) and the gas temperature ($T_1$), the calculation is a function of the nozzle upstream gas pressure ($P_1$) and the gas temperature ($T_1$). When the result calculated in advance is stored in the computer memory, and the result is referred to as described above, the calculation load can be reduced.

Incidentally, the reference flow rate ($K_{BASE}$) is calculated with reference to an EGR flow rate which is operated in a normal state to be stored in the computer memory.

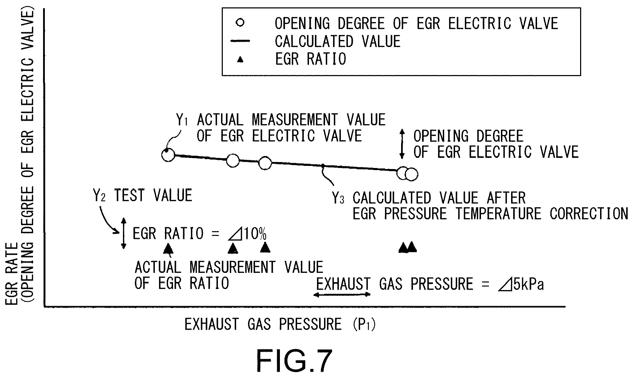

FIG. 7 is a relation diagram in which the exhaust gas pressure ($P_1$) (similar with the above-described nozzle upstream gas pressure ($P_1$)) as a horizontal axis and the EGR rate (the opening degree of the EGR valve) as a vertical axis are obtained with reference to the input value of the exhaust gas pressure sensor 28 provided in the upstream portion of the EGR electric valve 10 illustrated in FIG. 1 in the practical test of the EGR gas pressure temperature correction control in a state where the operating condition of the engine 1 is set to a maximum output condition in the control system of the EGR electric valve of this embodiment. In the practical test, the exhaust gas pressure is adjusted to intentionally create a low state or a high state from a normal pressure.

At this time, an opening degree $Y_1$ of the EGR electric valve 10 in the relation diagram is adjusted manually, and a test value of the EGR rate is made a constant $Y_2$. In addition, an EGR opening degree calculated by the EGR pressure temperature correction which is the invention is indicated by a solid line $Y_3$, and it is confirmed that an EGR opening degree (EGR rate) by the result $Y_1$ of an actual practical test coincides with that indicated by the solid line $Y_3$.

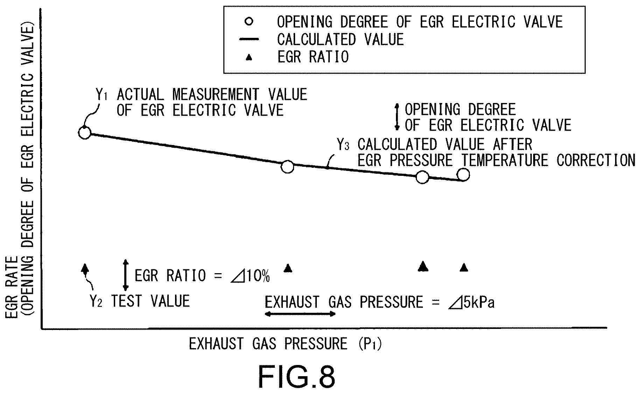

FIG. 8 illustrates a result obtained by performing a similar practical test under an operating condition of a maximum torque. Even in this case, similarly with that illustrated in FIG. 7, the opening degree of the EGR electric valve is adjusted manually such that the EGR rate is constant, but the result is obtained in which the test value $Y_2$ and the calculation value $Y_3$ coincides with each other.

From the above, it is proved that when the exhaust gas pressure sensor 28 and the exhaust gas temperature sensor 29 are added to the upstream of the EGR electric valve 10, and the pressure temperature correction is performed on the downstream pressure by using the information of the intake-pipe air-pressure sensor, the EGR rate can be controlled with high accuracy, and the EGR rate can be set with less error.

1 engine
2 exhaust pipe
3 turbocharger
4 branch pipe
5 branch pipe
6 waste gate valve
7 catalyst device
8 muffler
9 EGR cooler
10 EGR electric valve
11 throttle valve
12 air passage
13 air cleaner
14 intercooler
15 intake pipe
16 ECU

17 fuel injection valve
18 ignition device
19 EGR start determination processor
20 switching part of EGR electric valve opening command
21 rotational-speed sensor
22 intake-pipe air-temperature sensor
23 intake-pipe air-pressure sensor
24 exhaust λ sensor
25 EGR electric-valve basic opening degree calculation processor
26 EGR electric valve correction opening degree arithmetic processor
27 operator
28 exhaust gas pressure sensor
29 exhaust gas temperature sensor
30 operation part of correction term
31 operator
32 operation part of flow rate function
33 operation part of flow rate ratio
101 movable valve
102 valve seat
103 rotor
104 electromagnetic coil
105 ball screw
106 EGR gas inlet
107 EGR gas outlet
108 outlet-side housing
109 tapered nozzle

## Claims

1. A control system of an EGR electric valve used in an EGR device of an engine adopting a spark ignition engine, wherein
the EGR electric valve includes a driving device capable of electrically controlling a flow rate,
an exhaust gas pressure sensor and an exhaust gas temperature sensor are provided in an upstream of the EGR electric valve, and a gas pressure sensor is provided in a downstream of the EGR electric valve, and
a control device has a correction method of the EGR electric valve target opening degree for maintaining a constant EGR rate in which a pressure temperature correction term of an EGR electric valve opening degree is calculated to maintain a proper EGR flow rate in a case where an exhaust gas pressure or an exhaust gas temperature is changed by using information from the sensors and is accumulated into an EGR electric basic opening degree based on the pressure temperature correction term.

2. The control system of the EGR electric valve according to claim 1, wherein information of an intake-pipe air-pressure sensor provided in an intake pipe is used as exhaust gas pressure information of the downstream of the EGR electric valve.

3. The control system of the EGR electric valve according to claim 1 or 2, wherein information of the pressure temperature correction term of the EGR electric valve opening degree is based on a ratio of exhaust gas pressure information of the electric valve upstream and pressure information of the electric valve downstream.

4. The control system of the EGR electric valve according to any one of claims 1 to 3, wherein the Information of the pressure temperature correction term of the EGR electric valve opening degree is based on an exhaust the gas density calculated from the exhaust gas pressure information of the electric valve upstream and pressure information of the electric valve upstream.

5. The control system of the EGR electric valve according to any one of claims 1 to 4, wherein the information of the pressure temperature correction term of the EGR electric valve opening degree is based on a final correction factor calculated by accumulating both calculation results, which each are stored in a computer of the control device, of a ratio of an EGR flow rate change obtained from the exhaust gas pressure information of the electric valve upstream and a pressure ratio of the electric valve downstream and a ratio of an EGR flow rate change by an upstream gas density of an EGR valve.

6. The control system of the EGR electric valve according to any one of claims 1 to 5, wherein a frequency band passage filter is provided in at least one of the exhaust gas pressure sensor, the exhaust gas temperature sensor, and the gas pressure sensor to eliminate noise information, thereby reducing an unintentional driving of the EGR electric valve.

7. The control system of the EGR electric valve according to any one of claims 1 to 6, wherein the control device of the EGR electric valve is made common to an ECU, so as to suppress cost increase and achieve cooperation with an engine control.

8. The control system of the EGR electric valve according to any one of claims 1 to 7, wherein in a case where it is detected that the EGR electric valve target opening degree exceeds a constant range, deterioration of an engine system component and abnormality of an EGR function are detected to be reported to an operating person.

FIG.1

12 AIR PASSAGE
11 THROTTLE VALVE
10 EGR ELECTRIC VALVE
23 INTAKE-PIPE AIR-PRESSURE SENSOR
22 INTAKE-PIPE AIR-TEMPERATURE SENSOR
28 EXHAUST GAS PRESSURE SENSOR
29 EXHAUST GAS TEMPERATURE SENSOR
14 INTERCOOLER
9 EGR COOLER
3 TURBOCHARGER
4 BRANCH PIPE
17 FUEL INJECTION VALVE
18 IGNITION DEVICE
13 AIR CLEANER
1 ENGINE
15 INTAKE PIPE
2 EXHAUST PIPE
5 BRANCH PIPE
6 WASTE GATE VALVE
7 CATALYST DEVICE
8 MUFFLER
24 EXHAUST λ SENSOR
16 ECU (ENGINE CONTROL COMPUTER)
21 ROTATIONAL-SPEED SENSOR

EP 3 636 901 A1

104

106

10

105

103

101

102

107

108

FIG.2

FIG.3

FIG.4

FIG.5

32 OPERATION PART OF FLOW RATE FUNCTION ($\phi$)

Pc CRITICAL PRESSURE

33 OPERATION PART OF FLOW RATE RATIO

NOZZLE UPSTREAM GAS PRESSURE $P_1$

NOZZLE DOWNSTREAM GAS PRESSURE $P_2$

M=1.0 (SONIC REGION)  M<1.0 (SUBSONIC REGION)

EXPRESSION (2)

$$\phi_c = \sqrt{\kappa \left( \frac{2}{\kappa+1} \right)^{\frac{\kappa+1}{\kappa-1}}}$$

$$P_2/P_1 = \left( \frac{2}{\kappa+1} \right)^{\frac{\kappa}{\kappa-1}}$$

EXPRESSION (4)  CRITICAL PRESSURE RATIO

FLOW RATE FUNCTION ($\phi$)

PRESSURE RATIO ($P_2/P_1$)

0.0      1.0

$P_1$ (NOZZLE UPSTREAM GAS PRESSURE)

$\phi$ (FLOW RATE FUNCTION)

$P_2$ (NOZZLE DOWNSTREAM GAS PRESSURE)

$K_{BASE}$

$$\phi \frac{P_1}{\sqrt{R \cdot T_1}}$$

$K_{EGRPT}$

EXPRESSION (3)

$$\phi_s = \sqrt{\frac{2\kappa}{\kappa-1} \left\{ \left( \frac{P_2}{P_1} \right)^{\frac{2}{\kappa}} - \left( \frac{P_2}{P_1} \right)^{\frac{\kappa+1}{\kappa}} \right\}}$$

FIG.6

FIG.7

FIG.8

FIG.9

12 AIR PASSAGE
11 THROTTLE VALVE
10 EGR ELECTRIC VALVE
23 INTAKE-PIPE AIR-PRESSURE SENSOR
22 INTAKE-PIPE AIR-TEMPERATURE SENSOR
14 INTERCOOLER
9 EGR COOLER
3 TURBOCHARGER
4 BRANCH PIPE
17 FUEL INJECTION VALVE
18 IGNITION DEVICE
13 AIR CLEANER
1
ENGINE
15 INTAKE PIPE
2 EXHAUST PIPE
5 BRANCH PIPE
7 CATALYST DEVICE
8 MUFFLER
6 WASTE GATE VALVE
24 EXHAUST λ SENSOR
16 ECU (ENGINE CONTROL COMPUTER)
21 ROTATIONAL-SPEED SENSOR

EP 3 636 901 A1

FIG.10

FIG.11

Europäisches
Patentamt

European
Patent Office

Office européen
des brevets

# EUROPEAN SEARCH REPORT

**Application Number**

EP 19 20 0728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 101 15 750 A1 (BOSCH GMBH ROBERT [DE]) 26 September 2002 (2002-09-26) * paragraph [0009] - paragraph [0023]; figures 1-3 * | 1-8 | INV. F02D21/08 F02D41/14 F02M26/47 |
| X | EP 2 848 796 A1 (ISUZU MOTORS LTD [JP]) 18 March 2015 (2015-03-18) * paragraph [0026] - paragraph [0066]; figures 1-7 * | 1-8 | ADD. F02M26/49 F02D41/22 |
| X | EP 1 630 387 A1 (RENAULT SA [FR]) 1 March 2006 (2006-03-01) * paragraph [0013] * * paragraph [0018] - paragraph [0043]; figures 1-11 * | 1-8 | |
| X | US 2014/174414 A1 (HUANG MIKE [US] ET AL) 26 June 2014 (2014-06-26) * paragraph [0044] - paragraph [0069]; figure 1 * | 1-8 | |
| X | DE 100 41 076 A1 (BOSCH GMBH ROBERT [DE]) 7 March 2002 (2002-03-07) * paragraph [0010] - paragraph [0030]; claim 1; figures * | 1-8 | TECHNICAL FIELDS SEARCHED (IPC) F02D F02M |
| X | EP 1 020 626 A2 (FORD GLOBAL TECH INC [US]) 19 July 2000 (2000-07-19) * claims 1-3,5; figure 1 * | 1-8 | |

The present search report has been drawn up for all claims

| Place of search | Date of completion of the search | Examiner |
|---|---|---|
| Munich | 27 February 2020 | Aign, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 0728

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2020

| Patent document cited in search report | | Publication date | Patent family member(s) | | Publication date |
|---|---|---|---|---|---|
| DE 10115750 | A1 | 26-09-2002 | DE | 10115750 A1 | 26-09-2002 |
| | | | FR | 2822898 A1 | 04-10-2002 |
| | | | JP | 4404517 B2 | 27-01-2010 |
| | | | JP | 2002372446 A | 26-12-2002 |
| | | | US | 2002169573 A1 | 14-11-2002 |
| EP 2848796 | A1 | 18-03-2015 | CN | 104271934 A | 07-01-2015 |
| | | | EP | 2848796 A1 | 18-03-2015 |
| | | | JP | 5953918 B2 | 20-07-2016 |
| | | | JP | 2013234620 A | 21-11-2013 |
| | | | US | 2015083095 A1 | 26-03-2015 |
| | | | WO | 2013168674 A1 | 14-11-2013 |
| EP 1630387 | A1 | 01-03-2006 | EP | 1630387 A1 | 01-03-2006 |
| | | | FR | 2872220 A1 | 30-12-2005 |
| US 2014174414 | A1 | 26-06-2014 | NONE | | |
| DE 10041076 | A1 | 07-03-2002 | DE | 10041076 A1 | 07-03-2002 |
| | | | FR | 2813343 A1 | 01-03-2002 |
| | | | IT | MI20011807 A1 | 22-02-2002 |
| | | | JP | 5064620 B2 | 31-10-2012 |
| | | | JP | 2002106422 A | 10-04-2002 |
| | | | US | 2002124838 A1 | 12-09-2002 |
| EP 1020626 | A2 | 19-07-2000 | DE | 60000422 T2 | 09-01-2003 |
| | | | EP | 1020626 A2 | 19-07-2000 |
| | | | EP | 1059429 A2 | 13-12-2000 |
| | | | US | 6098602 A | 08-08-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7301155 A

- JP 2007309115 A